# EUROPEAN PATENT SPECIFICATION

(11) **EP 3 775 832 B1**
(45) Date of publication and mention of the grant of the patent: **22.12.2021**
(21) Application number: 18929710.4
(22) Date of filing: 09.08.2018
(51) Int. Cl.: G01N 1/28, G01N 35/00, B81B 1/00

(54) **CONDUCTIVITY-BASED REACTION CHAMBER CONTROL**
LEITFÄHIGKEITSBASIERTE REAKTIONSKAMMERSTEUERUNG
COMMANDE DE CHAMBRE RÉACTIONNELLE BASÉE SUR LA CONDUCTIVITÉ

(43) Date of publication of application: 17.02.2021
(73) Proprietor: HEWLETT-PACKARD DEVELOPMENT COMPANY, L.P., Spring, TX 77389 (US)
(72) Inventor: GOVYADINOV, Alexander, Corvallis, Oregon 97330 (US); SHKOLNIKOV, Viktor, Palo Verde, California 94304 (US)
(74) Representative: Plasseraud IP
(86) International application number: PCT/US2018/046095
(87) International publication number: WO 2020/032958

(56) References cited:
- WO-A1-03/072254
- WO-A1-2010/133997
- WO-A2-96/15269
- WO-A2-2004/061418
- AU-B4- 2012 101 548
- US-A1- 2011 024 309
- ROBERTO DA FONSECA JUNIOR et al.: "Experimental evaluation of behavior of intermittent flow in scenario of application of electrical submersible pump. SPE-173958-MS", This paper was prepared for presentation at the SPE Artificial Lift Conference -Latin America and Caribbean held in Salvador, 27 May 2015 (2015-05-27), XP055685308, Bahia, Brazil

## Description

### BACKGROUND

The analysis of chemical or biological fluids generally involves a series of operations such as sample preparation, reagent storage, property detection, and output processing/interpretation. In sample preparation, a sample of a fluid of interest is prepared for subsequent activation. Such preparation may include titration of various fluids and sample neutralization. WO2010/133997 A1 discloses a diagnostic device with sample application detector. WO96/15269 A2 discloses mesoscale polynucleotide amplification devices.

### BRIEF DESCRIPTION OF THE DRAWINGS

The accompanying drawings illustrate various examples of the principles described herein and are part of the specification. The illustrated examples are given merely for illustration, and do not limit the scope of the claims. The sample preparation system according to the invention is defined in claim 1 while the corresponding method according to the invention is defined in claim 8.
Fig. 1 is a block diagram of a sample preparation system with conductivity-based reaction chamber control, according to an example of the principles described herein.
Fig. 2 is a diagram of a sample preparation system with conductivity-based reaction chamber control, according to an example of the principles described herein.
Fig. 3 is a flow chart of a method for conductivity-based reaction chamber control, according to another example of the principles described herein.
Fig. 4 is a diagram of a sample preparation system with conductivity-based reaction chamber control, according to another example of the principles described herein.
Fig. 5 is a flow chart of a method for conductivity-based reaction chamber control, according to another example of the principles described herein.
Fig. 6 is a diagram of a sample preparation system with conductivity-based reaction chamber controls, according to another example of the principles described herein.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Analytic chemistry is a field of chemistry that uses instruments to separate, identify, and quantify matter. An analytic chemistry experiment includes various operations such as detection, measurement, signal processing, and output data analysis. Another unit operation of analytical chemistry is sample preparation, in which a particular solution is prepared for subsequent processing. In general, sample preparation may include taking a solution and removing constituent components or chemicals that would interfere with the analysis. Sample preparation operations may take many forms. One such example of a sample preparation operation is the neutralization of a basic or acidic solution. Specifically, an input sample may have a certain pH and a user may want to change the pH based on downstream analysis. That is, the subsequent analysis operations may be most effective with solutions at a particular pH. Accordingly, a user may titrate various fluids together to change the pH of the solution. In another example, a subsequent operation may include an enzymatic reaction for which a particular pH is desired. Similarly, in this case, the pH of the enzyme may be changed in the sample preparation stage via the addition of another fluid.

Instead of, or in addition to, changing the pH of the solution, a user may wish to change the conductivity of a particular solution. Similarly, this may be effectuated by adding a particular reagent to a solution.

Another example sample preparation operation includes separating an analyte from a solution. For example, to analyze deoxyribonucleic acid (DNA) molecules, the DNA may first be separated from the sample matrix, via for example a chaotropic agent. In yet another example, an analyte may be washed. For example, following DNA isolation, it may be desirable to wash the chaotropic agent away from the DNA. Accordingly, de-ionized water could be used to remove the chaotropic agent.

When sample preparation is completed, subsequent operations may be performed on the fluid. While sample preparation is undoubtedly effective at preparing for subsequent operations, and increasing the efficacy of these operations, certain advancements to this stage may increase the effectiveness of sample preparation, this providing for more accurate and reliable subsequent analysis, conserving reagents, and decreasing the time of the sample preparation procedure.

For example, sample preparation may be performed in an open loop format. That is, predefined amounts of fluids and predefined procedures are executed uniformly to samples. In these cases, it is assumed that all the operations in the sample preparation process go as planned and just the final result of the entire analytic process is measured. However, in these scenarios, there may be no determination as to whether the sample preparation process has gone as planned. Such an open loop format introduces variability into analytical chemistry. For example, different chemical reactions change based on a pH of the solution. With no way to verify that the sample preparation operation executed properly, the pH of a solution may be different than desired, thus skewing subsequent operations.

Accordingly, sample preparation clearly has an effect on the output. Any of the sample preparation operations that do not go as planned will influence the analytical results. As such, the open loop format of the sample preparation operation is ineffective and wasteful and could lead to incorrect data leading to bad analyses.

Accordingly, the present specification describes systems and methods for monitoring the sample preparation operations. Specifically, the systems and methods of the present specification use a measured conductivity within a reaction chamber to determine a state of the reaction chamber. That is, the present specification describes impedance sensor use for monitoring the sample preparation. In some examples, integrated impedance sensors monitor the conductivity of a reaction volume.

The measured conductivity may indicate, among other things, that a particular mixing operation has completed or may determine a presence, and quantity, of particular reagents in the reaction chamber. For example, a chaotropic agent in a DNA isolation operation may increase the conductivity of the solution in the reaction chamber. Accordingly, this conductivity measure could be used to determine a state of DNA isolation. Similarly, conductivity may map to the state of a neutralization reaction, with the lowest point of conductivity indicating a neutralized solution. Accordingly, a minima of the electrical conductivity may indicate that a neutralization operation has terminated. As such, an educated decision, rather than a mere assumption, is the basis for determining when a sample has been adequately prepared.

The present specification describes a system that comprises at least one reaction chamber, pumps, a number of chamber sensors and a controller as per appended claim 1, and includes, for each reaction chamber, multiple impedance sensors disposed at each of multiple inlets of a reaction chamber where a sample preparation operation is executed. The present system further includes an impedance sensor to detect a conductivity within a reaction chamber. These measured values are then compared to reference values to determine the state of the reaction. For example, impedance sensor values could be compared to reference values to determine when a neutralization operation has been completed. As another example, impedance sensor values could be compared to reference values to determine when a chaotropic agent has been removed from a sample such that just DNA molecules remain.

Specifically, the present specification describes a sample preparation system. The sample preparation system includes a reaction chamber to hold at least one fluid. An inlet impedance sensor detects a level of conductivity through at least one inlet of the reaction chamber and an outlet impedance sensor detects a level of conductivity through at least one outlet of the reaction chamber. A controller of the device determines, based on measured levels of conductivity, a state of a reaction within the reaction chamber.

The present specification also describes a method. According to the method, at least one fluid is received in a reaction chamber. A conductivity within the reaction chamber is measured. Based on the measured conductivity, a state of a chemical reaction within the reaction chamber is determined.

According to the present invention, the sample preparation system includes at least one reaction chamber to hold at least one fluid. Each reaction chamber includes multiple inlet impedance sensors disposed at each of multiple inlets of the reaction chamber to detect a level of conductivity through a corresponding inlet and an outlet impedance sensor to detect a level of conductivity through at least one outlet of the reaction chamber. Each reaction chamber also includes pumps disposed at each inlet and outlet to direct fluid through the reaction chamber. Each reaction chamber also includes a number of chamber sensors disposed within the reaction chamber. A controller of the system, based on measured levels of conductivity 1) determines a state of a reaction within the reaction chamber and 2) selectively activates the pumps based on the state of the reaction in that reaction chamber.

In summary, using such a sample preparation system 1) provides real-time monitoring of a sample preparation operation; 2) automates precision titration and mixing; 3) can be integrated onto a silicon lab-on-a-chip; 4) provides for closed loop feedback to improve sample preparation; 5) is low cost and effective; 6) conserves reagents; 7) decreases the duration of sample preparation operations; and 8) improves the consistency and precision of results. However, the devices disclosed herein may address other matters and deficiencies in a number of technical areas.

As used in the present specification and in the appended claims, the term "impedance" refers to an electrical impedance.

Still further, as used in the present specification and in the appended claims, the term "impedance" or "electrical impedance" refers to a measure of a system to oppose current flow. An active or real component of impedance is resistance. Conductivity is the reciprocal of resistance. Accordingly, the present specification can use impedance sensors, and from those sensors determine a conductivity within a reaction chamber. Moreover, while the present specification describes a conductivity measurement, the impedance sensors can also be used to determine an impedance measurement within the reaction chamber and such an impedance measurement can be used to control operation of the reaction chamber as described herein.

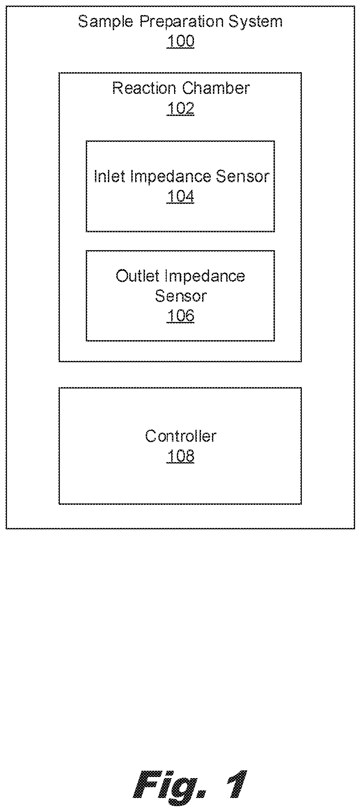

Turning now to the figures, Fig. 1 is a block diagram of a sample preparation system (100) with conductivity-based reaction chamber (102) control, according to an example of the principles described herein. The sample preparation system (100) includes various components for 1) executing a sample preparation operation and 2) monitoring the sample preparation operation. Specifically, the sample preparation system (100) includes a reaction chamber (102). Sample preparation operations are performed within the reaction chamber (102). For example, the reaction chamber (102) may receive fluids through one inlet sequentially, or through multiple inlets in parallel. In the reaction chamber (102) these components interact with one another. For example, a basic solution and an acidic solution may be combined in the reaction chamber (102) to form a neutralized solution. While specific reference is made to a neutralization operation, other sample preparation operations may be performed in the reaction chamber (102) including, but not limited to, analyte separation, solution washing, etc.

In some examples, the reaction chamber (102) may be a microfluidic structure. A microfluidic structure is a structure of sufficiently small size (e.g., of nanometer sized scale, micrometer sized scale, millimeter sized scale, etc.) to facilitate conveyance of small volumes of fluid (e.g., picoliter scale, nanoliter scale, microliter scale, milliliter scale, etc.).

The reaction chamber (102) includes multiple inlets and outlets through which fluid is received and expelled. At each inlet and outlet is an impedance sensor (104). Specifically, the sample preparation system (100) includes an inlet impedance sensor (104) to detect a level of conductivity through the inlet and an outlet impedance sensor (106) to detect a level of conductivity through an outlet of the reaction chamber (102). The impedance sensors (104, 106) operate to detect an impedance and/or a conductivity within the volume of the reaction chamber (102). As conductivity and impedance are related, one can be calculated from the other. Accordingly, an impedance measure can be taken and a conductivity calculated therefrom. As the conductivity of the contents of the reaction chamber (102) changes over time as the fluids therein interact with one another, the sensed conductivity by the impedance sensors (104, 106) also change overtime. This information could be used to determine a state of a reaction within the reaction chamber (102). The impedance sensors (104) may take many forms. For example, the impedance sensors (104) may include electrodes spaced apart from one another. The conductivity of the sample between the electrodes can be measured and passed to a controller (108).

The inlet impedance sensors (104) can be used to determine an amount of reagent to be used. The inlet impedance sensors (104) can also determine the composition of an incoming fluid, as well as a dilution of the incoming fluid. This inlet information can be used as data to determine when a desired state within the reaction chamber (102) has been reached.

In addition to what has already been described, the outlet impedance sensor (106) can be a quality assurance check. That is, the outlet impedance sensor (106) can determine that a solution exiting the reaction chamber (102) has the desired electrical properties, which desired electrical properties are mapped to desired chemical properties/composition etc. Thus, the impedance sensors (104, 106) are used to provide control/feedback over the events within the reaction chamber (102).

The controller (108) of the sample preparation system (100) provides the monitoring of the sample preparation. For example, the controller (108) receives the output of the impedance sensors (104, 106) to determine a state or condition of the reaction within the reaction chamber (102). For example, a neutralized solution following the mixture of two fluids may be identified as a point of lowest conductivity. As explained above, the conductivity of the solution may be measured by the impedance sensors (104, 106). When the lowest value of conductivity is received from the sensors (104, 106), the controller (108) may determine that the solution has been adequately neutralized. Thus, the controller (108), using data from the impedance sensors (104, 106), may determine the progress or completion of a particular chemical reaction.

In another example, the controller (108) may, based on measured conductivity values, determine the quantity of a particular fluid in the reaction chamber (102). For example, during DNA separation, a chaotropic agent, which is highly conductive, may be inserted into the reaction chamber (102) along with a sample containing DNA molecules. As the chaotropic agent is highly conductive, the measured conductivity by the impedance sensors (104, 106) will go up. Accordingly, based on an identified conductivity of the sample alone, for example as indicated by an inlet impedance sensor (104) prior to addition of the chaotropic agent, it can be determined by measuring a conductivity, how much chaotropic agent has been added.

As will be described below, the controller (108) may then be used to provide feedback to the entire system (100) and alter the operation of various components of the sample preparation system (100). That is, the controller (108) and sample preparation system (100) at large provide for active control of the chemical reaction and precision titration of chemical components by delivering feedback to integrated pumps to deliver fluid in the right proportions.

A specific example is now provided. In this example, a surface-enhanced Raman spectroscopy (SERS) sensor is used to detect melamine in milk samples. Before such detection, a process of cleaning the milk sample is performed. One of the operations of this sample preparation includes treating the milk sample with trichloroacetic acid (Cl₃CCOOH) to precipitate out proteins in the milk that interfere with melamine detection. Adding the trichloroacetic acid increases the conductivity of the solution. Neutralization of the trichloroacetic acid decreases conductivity. Accordingly, after precipitation of the proteins, the strong acidic media should be neutralized by treatment with a basic solution. The measured conductivity at the various stages of this chemical reaction can be sensed by the impedance sensors (104, 106). The measured values can be passed to the controller (108), which 1) determines when sufficient trichloroacetic acid has been added to precipitate the proteins, and 2) determines when sufficient trichloroacetic acid has been neutralized or removed for subsequent melamine detection.

In some examples, the sample preparation system (100) is part of a lab-on-chip analytic device. A lab-on-chip analytic device combines several laboratory functions on a single integrated circuit. Such lab-on-a-chip devices may be a few millimeters to a few square centimeters, and provide efficient small-scale fluid analysis functionality.

Thus, as described herein, the sample preparation system (100) not only executes sample preparation operations, but can determine a state of a reaction such that decisions regarding subsequent operations can be determined. For example, the controller (108) may determine whether a particular reaction is completed such that the fluid may be output. In another example, the controller (108) may determine that a particular reaction has not yet completed and can 1) prevent expulsion of the fluid from the reaction chamber (102) and/or 2) introduce additional fluid to advance the sample preparation reaction. As such, the sample preparation system (100) provides quality assurance that sample preparation has gone as planned and can allow or prevent subsequent actions based on the satisfactory completion of sample preparation operations as defined by the impedance and conductivity of the reaction chamber (102).

Such advanced control can increase efficiency of fluid analytics by ensuring that just the right amount of time is provided for sample preparation rather than blindly waiting a predetermined period of time, which may be too long or too short, and performing subsequent actions thereafter. The system (100) also may make more effective use of fluids as just the right amount of fluid may be used, rather than using more fluid than is needed, for example in a washing operation.

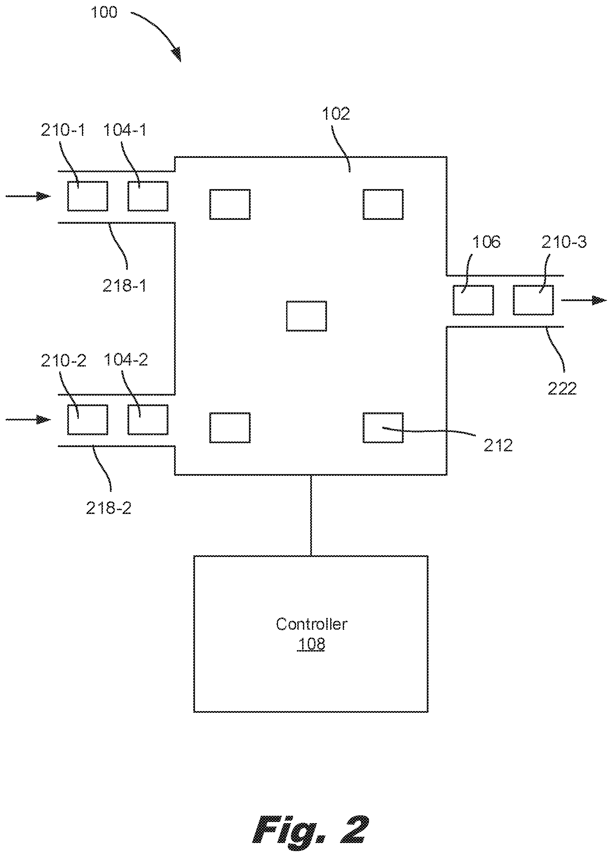

Fig. 2 is a diagram of a sample preparation system (100) with conductivity-based reaction chamber (102) control, according to an example of the principles described herein. As described above, the sample preparation system (100) includes a reaction chamber (102) wherein fluids are received and is the situ of a chemical reaction. Accordingly, the reaction chamber (102) includes multiple inlets (218-1, 218-2) through which fluid is received. Disposed in each inlet (212) is an inlet impedance sensor (104-1, 104-2) that detects an impedance level and a corresponding level of conductivity at each respective inlet (212). While Fig. 2 depicts two inlets (218) and two corresponding inlet impedance sensors (104-1, 104-2), the system (100) may include any number of inlets (218) and corresponding inlet impedance sensors (104-1, 104-2).

The reaction chamber (102) also includes an outlet (222) through which a combined solution is passed. An outlet impedance sensor (106) detects an impedance level and a corresponding level of conductivity at the outlet (222). While Fig. 2 depicts a single outlet (222) and a single corresponding outlet impedance sensor (106), the system (100) may include any number of outlets (222) and corresponding outlet impedance sensors (106). In some examples, the impedance sensors (104-1, 104-2, 106) may be integrated into the walls of the corresponding inlets/outlets (218, 222).

In this example, the sample preparation system (100) includes pumps (210) to direct fluid through the reaction chamber (102). Specifically, inlet pumps (210-1, 210-2) are disposed in, and sometimes integrated into, the inlets (218) to direct fluid such as reagents into the reaction chamber (102). Following a chemical reaction, an outlet pump (210-3) is activated to draw the admixture out of the reaction chamber (102).

In this example, the reaction chamber (102) also includes various chamber sensors (212) disposed within the reaction chamber (102). These sensors may be impedance sensors like the inlet sensors (104-1, 104-2) and the outlet sensor (106). For simplicity, just one chamber sensor (212) is depicted with a reference number. The chamber sensors (212), like the inlet sensors (104-1, 104-2) and the outlet sensor (106) provide information to the controller (108) on which subsequent feedback operations can be controlled. For example, if the sensor feedback indicates that a solution is not at a desired conductivity for a given sample preparation operation, the controller (108) may selectively activate an inlet pump (210-1, 210-2) to allow more of a particular reagent into the reaction chamber (102). The presence of this additional reagent may alter the reaction within the reaction chamber (102) such that a desired state is achieved.

The sample preparation system (100) also includes the controller (108) which as described above, determines a state of a reaction within the reaction chamber (102). That is, using outputs from the sensors (104-1, 104-2, 106, 212) the controller (108) can determine what is going on inside the reaction chamber (102) and in some cases selectively activate the pumps (210-1, 210-2, 210-3) based on the state of the reaction to alter the chemical reaction therein.

For example, during neutralization, one inlet (218-1) may direct a basic solution into the reaction chamber (102) and a second inlet (218-2) may direct an acidic solution into the reaction chamber (102). Throughout the reaction, the different sensors (104-1, 104-2, 106, 212) may pass conductivity measurements to the controller (108). The controller (108) can map these conductivity measures to a particular pH level given the particular basic and acidic solutions. If the measured conductivity indicates the pH is too acidic, the first inlet (218-1) may direct more of the basic solution into the reaction chamber. That is, the first pump (210-1) is activated to draw more basic solution into the reaction chamber. By comparison, if the measured conductivity indicates the pH is too basic, the second inlet (218-2) may direct more of the acidic solution into the reaction chamber. That is, the second pump (210-2) is activated to draw more acidic solution into the reaction chamber (102). Thus, the present sample preparation system (100) provides for the precision delivery of correct amounts of fluids to facilitate desired chemical reactions.

As another example, the controller (108) may selectively activate the outlet pump (210-3). For example, in a neutralization operation, it may be determined that the pH in the reaction chamber (102) is at a desired level based on a mapping between received conductivity measures and pH. Once at the desired level, the outlet pump (210-3) may be activated to draw the solution out of the reaction chamber (102) to, for example, another chamber on the lab-on-a-chip analytic device.

Accordingly, the present specification with a controller (108) that dynamically activates different components such as pumps (210) based on conductivity measures, provides a smart, or closed, feedback system that can ensure that sample preparation is executing as desired and prevents early ejection of a sample fluid prior to such point in time.

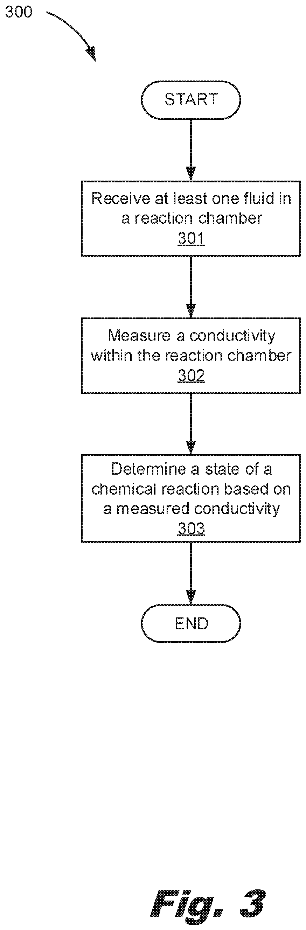

Fig. 3 is a flow chart of a method (300) for conductivity-based reaction chamber (Fig. 1, 102) control, according to another example of the principles described herein. According to the method (300) at least one fluid is received (block 301) in a reaction chamber (Fig. 1, 102) of a sample preparation system (Fig. 1, 100). That is, different reagents, or different solutions to be chemically mixed are passed via inlets (Fig. 2, 218) into the reaction chamber (Fig. 1, 102). The fluid is driven via inlet pumps (Fig. 2, 210) disposed in, or integrated within the walls of, the inlets (Fig. 2, 218).

During the chemical reaction, conductivity within the reaction chamber (Fig. 1, 102) is measured (block 302). For example, inlet impedance sensors (Fig. 1, 104) determine a conductivity of the reagents as they enter the reaction chamber (Fig. 1, 102) through corresponding inlets (Fig. 2, 218) and an outlet impedance sensor (Fig. 1, 106) determines a conductivity of the admixture as it exits the reaction chamber (Fig. 1, 102).

The controller (Fig. 1, 108) can then determine (block 303) a state of a chemical reaction based on the measured conductivity. That is, based on a particular application, or rather based on a particular sample preparation operation, sensor outputs may be mapped to a particular state of the reaction within the reaction chamber (Fig. 1, 102). For example, a sample preparation operation may involve mixing a basic solution with an acidic solution to achieve an admixture having a certain pH. Based on the properties of both the basic solution and the acidic solution, the controller (Fig. 1, 108) may map different conductivity measures to different pH values. Accordingly, once sensor (Fig. 1, 104, 106) outputs are received, the controller (Fig. 1, 108) can determine a pH of the admixture. As has been described above, different pumps (Fig. 2, 210) can then be selectively activated to adjust fluid flow until the pH is a desired value.

As highlighted by this example, the present method (300) therefore allows for precise titration and use of correct amounts of solution, thus preventing wasteful excess use and ensuring enough is used to facilitate the chemical reaction. Without such closed-loop feedback provided by the method (300) and the controller (Fig. 1, 108), a user would otherwise have to guess as to the amount necessary to effect a desired reaction.

In some examples, determining (block 303) a state of a chemical reaction includes determining an amount of the fluids present therein. For example, as has been described, chaotropic agent may be added to a sample containing DNA to separate the DNA from the sample. As chaotropic agent is highly conductive, it would be expected that the conductivity output by the sensors (Fig. 1, 104, 106) increases. Accordingly, the controller (Fig. 1, 108) may determine from a mapping, that for a given conductivity, a certain amount of the chaotropic agent is present in the reaction chamber (Fig. 1, 102). This information may be used to determine whether more chaotropic agent should be used to adequately concentrate and separate the DNA molecules.

As highlighted by this example, the present sample preparation system (Fig. 1, 100) allows for the use of the right amount of chaotropic agent, this alleviating wasteful use of an excess amount. Such precision in certain cases could reduce costs as such fluids may be expensive.

In another example, determining (block 303) a state of the chemical reaction includes determining a stage of the chemical reaction. For example, given a DNA washing where de-ionized water is added to rinse a sample, the controller (Fig. 1, 108) may determine to what degree the chaotropic agent has been removed from the solution. That is, as the chaotropic agent is highly conductive, its removal reduces the conductivity of the solution in the reaction chamber (Fig. 1, 102). Accordingly, by monitoring the conductivity during a washing operation, it can be determined, based on measured levels of conductivity, how much of the chaotropic agent has been rinsed.

As highlighted by this example, the present system (100) provides enhanced monitoring and control over sample preparation operations. Without the control described herein, a user would have to estimate when a cleansing has been sufficient, which could lead to waste and may be an inefficient use of time and resources and may lead to spurious results. Accordingly, the present method (300) provides enhanced, and more efficient sample preparation operations.

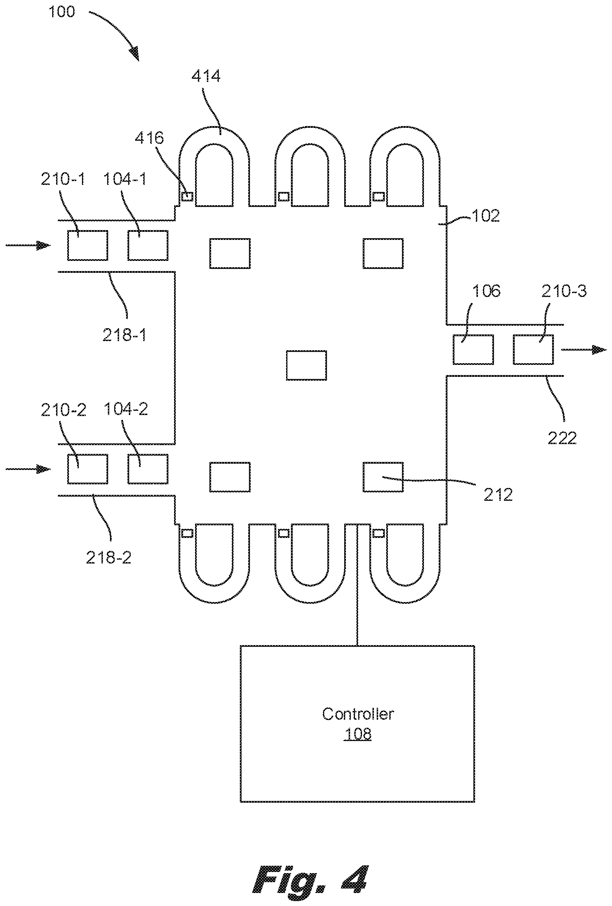

Fig. 4 is a diagram of a sample preparation system (100) with conductivity-based reaction chamber (102) control, according to another example of the principles described herein. As described in other figures, the sample preparation system (100) may include a reaction chamber (102), inlet impedance sensors (104-1, 104-2), an outlet impedance sensor (106), inlet and outlet pumps (210-1, 210-2, 210-3) and chamber sensors (212).

In the example depicted in Fig. 4, the sample preparation system (100) further includes a number of mixing chambers (414). For simplicity, one instance of a mixing chamber (414) is depicted with a reference number. The mixing chamber (414) creates flow within the reaction chamber (102) to mix components therein. That is, a mixing pump (416) disposed in the mixing chamber (414), draws fluid through the mixing chamber (414), which may be a U-shaped bend. As the fluid leaves and enters the mixing chamber (414), turbulent flow is generated at the connections to the reaction chamber (102) such that fluid is mixed at the interface of the mixing chambers (414) and the reaction chamber (102).

These mixing chambers (414) can be used to facilitate enhanced sample preparation operations. For example, not based on any feedback from the sensors (104, 106, 212), the mixing pumps (416) can be activated to ensure uniform distribution of the contents of the reaction chamber (102).

In another example, the sensors and particularly the chamber sensors (212) may be used to ensure uniformity. That is, each chamber sensor (212) may pass conductivity measurements to the controller (108). When different chamber sensors (212) have different conductivity measurements, this may indicate localized levels of conductivity. If measurements between the different chamber sensors (212) are outside of a predetermined range, the controller (108) can selectively activate the mixing pumps (416) to draw fluid into the mixing chambers (414). The above described action of these mixing chambers (414) operates to more uniformly distribute the contents, which more uniform distribution may be indicated by conductivity measurements from the sensors that are closer to one another. Accordingly, the sample preparation system (100) as described herein may operate in a repeating process to determine a uniformity of the reaction fluid by collecting conductivity data from each of the chamber sensors (212). If such measurements are outside of a threshold range, the mixing pumps (416) in the mixing chambers (414) may then be activated to draw fluid through the mixing chambers (414) thus ensuring a greater uniformity. Conductivity data can again be collected from the chamber sensors (212) to ensure a more uniform distribution and if desired, trigger a second cycle of mixing via the mixing pumps (416) and mixing chambers (414). Thus, the present system provides for uniform distribution during the sample preparation stage.

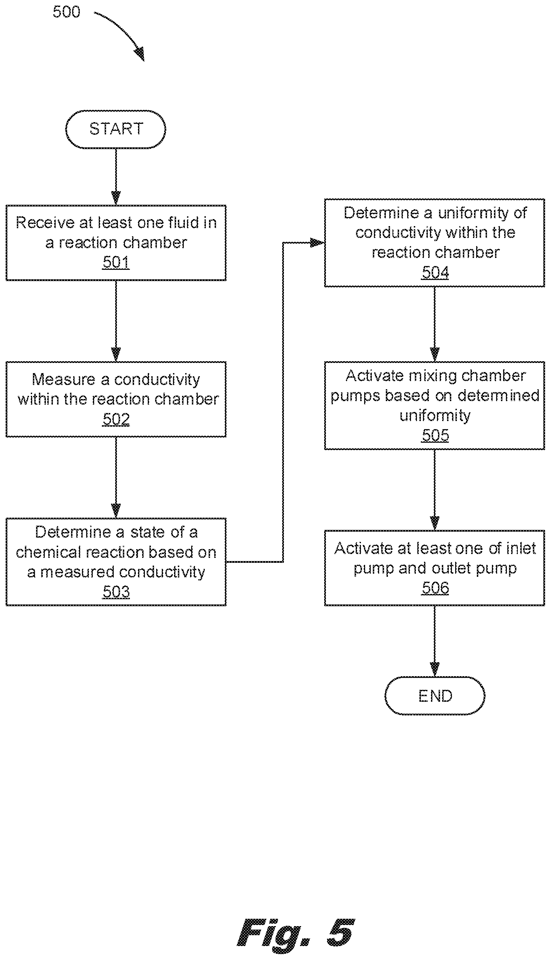

Fig. 5 is a flow chart of a method (500) for conductivity-based reaction chamber (Fig. 1, 102) control, according to another example of the principles described herein. While Figs. 2 and 5 depict operations in a particular order, the operations described herein may be performed in any order.

According to the method (500), a fluid is received (block 501) in a reaction chamber (Fig. 1, 102) and a conductivity within the reaction chamber is measured (block 502). From such conductivity measures, a state of the chemical reaction in the reaction chamber (Fig. 1, 102) may be determined (block 503). These operations may be performed as described above in connection with Fig. 3.

At some point, or continuously, during operation, a uniformity of the conductivity of the solution within the reaction chamber (Fig. 1, 102) may be determined (block 504). That is, conductivity measurements form the various chamber sensors (Fig. 2, 212) may be compared against one another. If the conductivity measurements are a predefined degree different from one another, it may be determined that the properties of the solution, or rather a particular observed property, is not uniform across the reaction chamber (Fig. 1, 102). That is, a non-uniformity of conductive measurements indicates a non-uniformity of various properties of the contents therein.

Based on a determination of a non-uniform solution, mixing pumps (Fig. 4, 416) in mixing chambers (Fig. 4, 414) may be activated (block 505). The activation of the mixing pumps (Fig. 4, 416) draws fluid into the mixing chambers (Fig. 4, 414). Entry into the mixing chamber (Fig. 3, 414) and exit out of the mixing chamber (Fig. 4, 414) creates turbulence with the rest of the fluid in the reaction chamber (Fig. 1, 102), which turbulence mixes the contents of the reaction chamber (Fig. 1, 102) thus promoting a more uniform distribution of the fluid.

In addition to activating the mixing pumps (Fig. 4, 416), the controller (Fig. 1, 108) may also activate (block 506) inlet and outlet pumps (Fig. 2, 210 and Fig. 4, 210) of the sample preparation system (Fig. 1, 100). For example, if it is determined that more of a particular reagent is desired for a particular chemical reaction, corresponding inlet pumps (Figs. 2 and 4, 210-1, 210-2) may be activated to introduce the agent. By comparison, if it is determined that a particular chemical reaction has been completed to satisfaction, the outlet pump (Figs. 2 and 4, 210-3) may be activated to expel the admixture to another chamber for further processing.

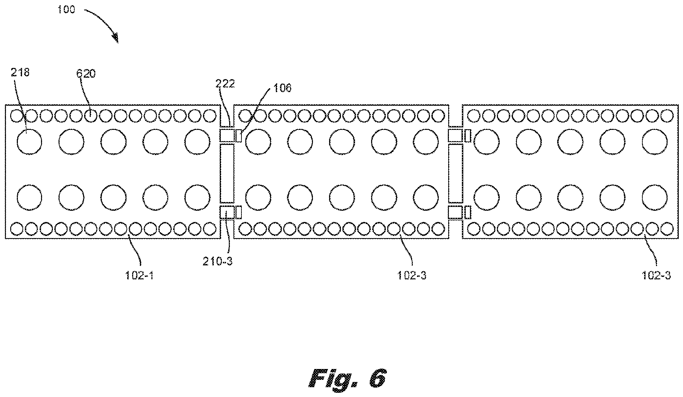

Fig. 6 is a diagram of a sample preparation system (100) made up of multiple reaction chambers (102), according to another example of the principles described herein. More specifically, the sample preparation system (100) includes multiple reaction chambers (102-1, 102-2, 102-3) that each may perform a different operation. As described above, each reaction chamber (102) has a way to receive and expel fluid. Accordingly, each reaction chamber (102) may have a number of inlets (218). For simplicity in Fig. 6, just one inlet (218) is indicated with a reference number. Through these inlets (218) different fluids are introduced into the reaction chamber (102) to be mixed with one another. Associated with each of these inlets (218) is an inlet pump (Fig. 2, 210-1) to move the fluid into the reaction chamber (102). Impedance sensors (Fig. 1, 104) may also be disposed therein to determine a conductivity of fluid entering through the inlets (218).

Each fluid also includes an outlet (222), which may be a passageway to an adjacent reaction chamber (102). Similarly, each passageway, as it is an outlet (222) of a particular reaction chamber (102), has an outlet pump (210-3) disposed therein as well as an outlet impedance sensor (106) to measure a conductivity of fluid exiting the particular reaction chamber (102). For simplicity in Fig. 6, just one instance of an outlet (222), outlet pump (210-3), and outlet impedance sensor (106) is indicated with a reference number. As described above, either of the inlet pumps (Fig. 2, 210-1, 210-2) or the outlet pump (210-3) can be activated based on a sensed conductivity within a particular reaction chamber (102).

In some examples, each reaction chamber (102) also includes a number of ejection nozzles (620) to eject a fluid from the reaction chamber (102) and the sample preparation system (100). For example, de-ionized water may be used to wash a sample after it has been involved in a chemical reaction. It may be desirable to remove this de-ionized water following the washing to flush out undesired components. Accordingly, the ejection nozzles (620) may be activated to expel the de-ionized water from the solution.

To facilitate the ejection of fluid, each ejection nozzle (620) includes various components. For example, an ejection nozzle (620) includes an ejection chamber to hold an amount of fluid to be ejected, an opening through which the amount of fluid is ejected, and an ejector, disposed within the ejection chamber, to eject the amount of fluid through the opening.

Turning to the ejectors, the ejector may include a firing resistor or other thermal device, a piezoelectric element, or other mechanism for ejecting fluid from the ejection chamber. For example, the ejector may be a firing resistor. The firing resistor heats up in response to an applied voltage. As the firing resistor heats up, a portion of the fluid in the ejection chamber vaporizes to generate a bubble. This bubble pushes fluid out the opening. As the vaporized fluid bubble collapses, fluid is drawn into the ejection chamber from a passage that connects the fluid ejection device to the bead-capturing chamber, and the process repeats. In this example, the nozzle (620) may be a thermal inkjet (TIJ) nozzle (620).

In another example, the ejector may be a piezoelectric device. As a voltage is applied, the piezoelectric device changes shape which generates a pressure pulse in the ejection chamber that pushes the fluid out the opening. In this example, the nozzle (620) may be a piezoelectric inkjet (PIJ) nozzle (620).

In a specific example of fluidic ejection, a chaotropic agent is added to a reaction chamber (102) to concentrate DNA molecules. When the controller (Fig. 1, 108) indicates that the DNA has been sufficiently concentrated, based on measurement values from the impedance sensors (Fig. 1, 104, 106, Fig. 2, 212), then the nozzles (620) may be activated to expel the chaotropic agent from the reaction chamber (102), such that a cleaned DNA concentration could be passed to a subsequent reaction chamber (102). In these examples and others, the nozzles (620) may be selectively activated by the controller (Fig. 1, 108) based on a state of the reaction.

In summary, using such a sample preparation system 1) provides real-time monitoring of a sample preparation operation; 2) automates precision titration and mixing; 3) can be integrated onto a silicon lab-on-a-chip; 4) provides for closed loop feedback to improve sample preparation; 5) is low cost and effective; 6) conserves reagents; 7) decreases the duration of sample preparation operations; and 8) improves the consistency and precision of results. However, the devices disclosed herein may address other matters and deficiencies in a number of technical areas.

## Claims

1. A sample preparation system (100) comprising:
at least one reaction chamber (102) to hold at least one fluid;
for each reaction chamber:
multiple inlet impedance sensors (104) disposed at each of multiple inlets of a reaction chamber to detect a level of conductivity through a corresponding inlet;
an outlet impedance sensor (106) to detect a level of conductivity through at least one outlet of the reaction chamber;
pumps disposed at each inlet and outlet to direct fluid through the reaction chamber; and
a number of chamber sensors disposed within the reaction chamber; and
a controller (108) to, based on measured levels of conductivity:
determine a state of a reaction within each reaction chamber; and
selectively activate the pumps within each reaction chamber based on the state of the reaction in that reaction chamber.

2. The system of claim 1, wherein:
each reaction chamber further comprises a number of ejection nozzles (620) to eject the fluid from the reaction chamber; and
the controller selectively activates the number of ejection nozzles based on the state of the reaction.

3. The system of claim 1, further comprising multiple sequential reaction chambers.

4. The system of claim 1, wherein the system is part of a lab-on-chip analytic device.

5. The system of claim 1, further comprising a number of mixing chambers (414) extending from the reaction chamber, each mixing chamber having a mixing pump (416) disposed therein.

6. The system of claim 5, wherein:
the controller selectively activates the mixing pumps when the state of the reaction indicates non-uniform conductivity within the reaction chamber based on outputs of the number of chamber sensors.

7. The system of claim 1, wherein the reaction chamber is a microfluidic chamber.

8. A method (300, 500), comprising:
receiving (301, 501) in a reaction chamber of a sample preparation system according to any of the above claims, at least one fluid;
measuring (302, 502) a conductivity within the reaction chamber; and
determining (303, 503) a state of a chemical reaction within the reaction chamber based on a measured conductivity.

9. The method of claim 8, further comprising determining an amount of the at least one fluid in the reaction chamber based on the measured conductivity.

10. The method of claim 8, further comprising:
determining (504), from chamber sensors disposed within the reaction chamber, a uniformity of the conductivity within the reaction chamber; and
activating (505) mixing pumps disposed within mixing chambers based on a determined uniformity.

11. The method of claim 8, further comprising activating (506) at least one of an inlet pump and an outlet pump based on the state of the chemical reaction.

## Patentansprüche

1. Probenvorbereitungssystem (100), das Folgendes umfasst:
wenigstens eine Reaktionskammer (102), um wenigstens ein Fluid zu halten;
für jede Reaktionskammer:
mehrere Einlassimpedanzsensoren (104), die an jedem der mehreren Einlässe einer Reaktionskammer angeordnet sind, um einen Leitfähigkeitspegel durch einen entsprechenden Einlass zu erfassen;
einen Auslassimpedanzsensor (106), um einen Leitfähigkeitspegel durch wenigstens einen Auslass der Reaktionskammer zu erfassen;
Pumpen, die an jedem Einlass und Auslass angeordnet sind, um Fluid durch die Reaktionskammer zu leiten; und
eine Anzahl von Kammersensoren, die innerhalb der Reaktionskammer angeordnet sind; und
eine Steuerung (108), die, auf der Basis gemessener Leitfähigkeitspegel, Folgendes durchführt:
Bestimmen eines Zustands einer Reaktion innerhalb jeder Reaktionskammer; und
selektives Aktivieren der Pumpen innerhalb jeder Reaktionskammer auf der Basis des Zustands der Reaktion in dieser Reaktionskammer.

2. System nach Anspruch 1, wobei:
jede Reaktionskammer ferner eine Anzahl von Ausstoßdüsen (620) umfasst, um das Fluid aus der Reaktionskammer auszustoßen; und
die Steuerung die Anzahl von Ausstoßdüsen auf der Basis des Zustands der Reaktion selektiv aktiviert.

3. System nach Anspruch 1, das ferner mehrere sequenzielle Reaktionskammern umfasst.

4. System nach Anspruch 1, wobei das System Teil einer Lab-on-Chip-Analysevorrichtung ist.

5. System nach Anspruch 1, das ferner eine Anzahl von Mischkammern (414) umfasst, die sich aus der Reaktionskammer erstrecken, wobei jede Mischkammer eine darin angeordnete Mischpumpe (416) aufweist.

6. System nach Anspruch 5, wobei:
die Steuerung die Mischpumpen selektiv aktiviert, wenn der Zustand der Reaktion auf der Basis von Ausgaben der Anzahl von Kammersensoren eine ungleichmäßige Leitfähigkeit innerhalb der Reaktionskammer anzeigt.

7. System nach Anspruch 1, wobei die Reaktionskammer eine Mikrofluidikkammer ist.

8. Verfahren (300, 500), das Folgendes umfasst:
Aufnehmen (301, 501) wenigstens eines Fluids in einer Reaktionskammer eines Probenvorbereitungssystems nach einem der vorhergehenden Ansprüche;
Messen (302, 502) einer Leitfähigkeit innerhalb der Reaktionskammer; und
Bestimmen (303, 503) eines Zustands einer chemischen Reaktion innerhalb der Reaktionskammer auf der Basis einer gemessenen Leitfähigkeit.

9. Verfahren nach Anspruch 8, das ferner das Bestimmen einer Menge des wenigstens einen Fluids in der Reaktionskammer auf der Basis der gemessenen Leitfähigkeit umfasst.

10. Verfahren nach Anspruch 8, das ferner Folgendes umfasst:
Bestimmen (504), von Kammersensoren, die innerhalb der Reaktionskammer angeordnet sind, einer Gleichmäßigkeit der Leitfähigkeit innerhalb der Reaktionskammer; und
Aktivieren (505) von Mischpumpen, die innerhalb von Mischkammern angeordnet sind, auf der Basis einer bestimmten Gleichmäßigkeit.

11. Verfahren nach Anspruch 8, das ferner das Aktivieren (506) einer Einlasspumpe und/oder einer Auslasspumpe auf der Basis des Zustands der chemischen Reaktion umfasst.

## Revendications

1. Système de préparation d'échantillons (100) comprenant :
au moins une chambre de réaction (102) destinée à contenir au moins un fluide ;
pour chaque chambre de réaction :
de multiples capteurs d'impédance d'entrée (104) disposés à chacune des multiples entrées d'une chambre de réaction pour détecter un niveau de conductivité à travers une entrée correspondante ;
un capteur d'impédance de sortie (106) pour détecter un niveau de conductivité à travers au moins une sortie de la chambre de réaction ;
des pompes disposées à chaque entrée et sortie pour diriger le fluide à travers la chambre de réaction ; et
un certain nombre de capteurs de chambre disposés à l'intérieur de la chambre de réaction ; et
un dispositif de commande (108) pour, en fonction des niveaux de conductivité mesurés :
déterminer un état d'une réaction à l'intérieur de chaque chambre de réaction ; et
activer sélectivement les pompes à l'intérieur de chaque chambre de réaction en fonction de l'état de la réaction dans cette chambre de réaction.

2. Système selon la revendication 1 :
chaque chambre de réaction comprenant en outre un certain nombre de buses d'éjection (620) pour éjecter le fluide de la chambre de réaction ; et
le dispositif de commande active sélectivement le nombre de buses d'éjection en fonction de l'état de la réaction.

3. Système selon la revendication 1, comprenant en outre de multiples chambres de réaction séquentielles.

4. Système selon la revendication 1, le système faisant partie d'un dispositif d'analyse de laboratoire sur puce.

5. Système selon la revendication 1, comprenant en outre un certain nombre de chambres de mélange (414) s'étendant à partir de la chambre de réaction, chaque chambre de mélange ayant une pompe de mélange (416) disposée à l'intérieur.

6. Système selon la revendication 5 :
le dispositif de commande activant sélectivement les pompes de mélange lorsque l'état de la réaction indique une conductivité non uniforme à l'intérieur de la chambre de réaction sur la base des sorties du nombre de capteurs de la chambre.

7. Système selon la revendication 1, la chambre de réaction étant une chambre microfluidique.

8. Procédé (300, 500) comprenant :
la réception (301, 501) dans une chambre de réaction d'un système de préparation d'échantillons selon l'une quelconque des revendications ci-dessus, d'au moins un fluide ;
la mesure (302, 502) d'une conductivité à l'intérieur de la chambre de réaction ; et
la détermination (303, 503) d'un état d'une réaction chimique à l'intérieur de la chambre de réaction sur la base d'une conductivité mesurée.

9. Procédé selon la revendication 8, comprenant en outre la détermination d'une quantité de l'au moins un fluide dans la chambre de réaction en fonction de la conductivité mesurée.

10. Procédé selon la revendication 8, comprenant en outre :
la détermination (504), à partir de capteurs de chambre disposés à l'intérieur de la chambre de réaction, d'une uniformité de la conductivité à l'intérieur de la chambre de réaction ; et
l'activation (505) de pompes de mélange disposées à l'intérieur de chambres de mélange sur la base d'une uniformité déterminée.

11. Procédé selon la revendication 8, comprenant en outre l'activation (506) d'au moins l'une d'une pompe d'entrée et d'une pompe de sortie en fonction de l'état de la réaction chimique.
